**Europäisches Patentamt**

**European Patent Office**

**Office européen des brevets**

(19)

(11) Numéro de publication: **0 033 275 B1**

(12) **FASCICULE DE BREVET EUROPEEN**

(45) Date de publication du fascicule du brevet:
**21.09.83**

(51) Int. Cl.³: **B 29 D 3/02, B 64 C 27/32**

(21) Numéro de dépôt: **81400091.5**

(22) Date de dépôt: **23.01.81**

(54) **Procédé de fabrication d'un élément flexible et torsible et éléments obtenus selon ce procédé.**

(30) Priorité: **28.01.80 FR 8001745**

(43) Date de publication de la demande:
**05.08.81 Bulletin 81/31**

(45) Mention de la délivrance du brevet:
**21.09.83 Bulletin 83/38**

(84) Etats contractants désignés:
**DE FR GB IT**

(56) Documents cités:
**FR-A-2 041 747**
**FR-A-2 065 532**
**GB-A-1 125 513**
**US-A-3 265 554**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Aubry, Jacques Antoine, 2, avenue Marie Gasquet Domaine du Lac Bleu, F-13480 Cabries Bouches-du-Rhône (FR)**

(74) Mandataire: **Lepeudry-Gautherat, Thérèse et al, Cabinet Armengaud Jeune Casanova, Akerman, Lepeudry 23 boulevard de Strasbourg, F-75010 Paris (FR)**

ACTORUM AG

## Procédé de fabrication d'un élément flexible et torsible et éléments obtenus selon ce procédé

La présente invention a pour objet un procédé de fabrication d'un élément flexible et torsible et les éléments obtenus selon ce procédé, destinés en particulier, mais non exclusivement, à raccorder deux organes en présentant une forte résistance à la traction tout en restant souple en torsion autour de l'axe longitudinal de l'élément et flexible perpendiculairement audit axe. A titre d'exemple, de tels éléments peuvent être employés dans la construction aéronautique, notamment dans le domaine des hélicoptères.

On connaît déjà des éléments composites ternaires comprenant des filaments à forte résistance mécanique, une résine thermodurcissable et un élastomère. Les filaments continus sont enrobés dans la résine thermodurcissable et réunis pour constituer un profilé de forme quelconque. Ces profilés sont juxtaposés pour former un faisceau et sont enrobés individuellement dans leur partie centrale et agglomérés par l'élastomère vulcanisé, tandis qu'ils s'épanouissent aux extrémités du faisceau où ils sont intercalés entre des nappes de tissu de fibres synthétiques. Un tel élément est décrit dans le brevet français N° 2041747 déposé le 20 mai 1969 au nom de la titulaire pour la liaison des pales au moyeu d'un hélicoptère.

La technique antérieure d'élaboration d'un tel élément de liaison flexible et torsible consistait à:

— faire circuler les filaments continus dans une machine d'imprégnation contenant une résine thermodurcissable, puis dans une filière pour obtenir un profilé à la forme désirée;

— découper des tronçons de longueur voulue dans le profilé;

— disposer manuellement dans un demi-moule ayant la forme d'une moitié de l'élément:

des stratifils placés transversalement par rapport à l'axe longitudinal de l'élément,

des couches de tissu de revêtement dans la zone d'attache de l'élément et dans la zone d'emplanture,

au moins une nappe de tissu préimprégné de résine, aux extrémités du demi-moule, et

dans la partie centrale, une première couche d'élastomère et sur celle-ci une couche desdits tronçons imprégnés de résine non polymérisée, placés longitudinalement et légèrement écartés les uns des autres,

— écraser les extrémités des tronçons contre les nappes de tissu;

— couler une seconde couche d'élastomère;

— ajouter sur l'ensemble une deuxième couche de tronçons et en écraser les extrémités sur les nappes précédentes;

— renouveler les dépôts de nappes, tronçons et élastomère selon le cycle précédent jusqu'au remplissage complet du demi-moule inférieur;

— remplir le demi-moule supérieur de la même façon;

— assembler les deux demi-moules ainsi remplis;

— polymériser dans les conditions de durée et de température requises par la résine et l'élastomère utilisés, et

— démouler.

Il ressort de l'énonciation même des opérations à effectuer que l'inconvénient majeur de la technique antérieure réside dans la durée prononcée des temps de fabrication et, par conséquent, dans le prix de revient d'un élément fabriqué, acceptable dans les phases de recherches et d'expérimentation de prototypes mais incompatible avec une production en série. Par ailleurs, malgré les précautions prises, un tel procédé aboutit à une répartition irrégulière des tronçons dans la portion centrale de l'élément à réaliser et à une courbure plus ou moins accentuée de ces derniers, facteurs très défavorables pour une transmission correcte des efforts et pour la résistance d'ensemble présentée par l'élément flexible et torsible vis-à-vis des sollicitations dynamiques auxquelles il est soumis.

La présente invention a pour objet un procédé de fabrication de caractère industriel palliant les inconvénients précités.

La présente invention concerne un procédé de fabrication continue d'un élément composite flexible et torsible comprenant des filaments à forte résistance mécanique, une résine thermodurcissable et un élastomère, selon lequel on fait, dans un premier temps, circuler des filaments continus dans une machine d'imprégnation contenant la résine thermodurcissable, puis on calibre les filaments imprégnés et réunis entre eux en les faisant passer dans une filière pour obtenir un profilé à la forme désirée, et on découpe des tronçons de longueur désirée dans le profilé, le procédé étant caractérisé en ce que:

— on réalise séparément plusieurs nappes unitaires, chaque nappe unitaire étant obtenue par disposition de tronçons imprégnés de résine à l'état non polymérisé dans des rainures calibrées ménagées dans un moule de fabrication, les extrémités des tronçons étant écrasées entre des nappes de tissu imprégnées de résine, l'ensemble étant ensuite polymérisé dans les conditions de température et de durée requises par la résine utilisée et formant ladite nappe unitaire;

— on empile plusieurs nappes unitaires dans un moule d'assemblage;

— on injecte l'élastomère à l'état visqueux dans ledit faisceau, la qualité et la viscosité adoptées étant fonction des caractéristiques voulues d'élasticité et d'amortissement, l'élastomère formant un liant des tronçons, et

— on vulcanise ledit élastomère dans des conditions de température et de durée liées à ses caractéristiques.

Grâce au procédé selon l'invention, on améliore très notablement la qualité de l'élément flexible et torsible par suite de la parfaite rectitude des profilés et de leur répartition régulière dans la partie centrale dudit élément. Les opérations effectuées au cours du procédé sont parfaitement répétitives, ce qui permet une fabrication industrielle. Le découpage des phases de fabrication permet une automatisation complète du procédé entraînant une réduction des heures de main-d'œuvre, qui sont divisées par un facteur 10 environ, ce qui allège notablement le coût de revient de chaque élément. Enfin, ce même découpage permet également un contrôle plus facile et plus complet de chaque élément, ce qui est essentiel dans la construction aéronautique.

D'autres avantages de l'invention apparaîtront au cours de la description qui va suivre d'un mode de réalisation particulier, donné uniquement à titre d'exemple non limitatif, en regard des figures qui représentent:

la fig. 1, une vue éclatée d'un moule et des constituants disposés à l'intérieur dudit moule pour obtenir une nappe unitaire;

la fig. 2, une nappe unitaire obtenue par moulage dans le moule de la fig. 1;

la fig. 3, une vue éclatée de l'assemblage de deux nappes unitaires;

la fig. 4, une vue partielle d'un moule d'assemblage de nappes unitaires;

la fig. 5, l'extrémité d'un élément flexible et torsible selon l'invention;

la fig. 6, un schéma montrant une utilisation d'un élément selon l'invention;

la fig. 7, une vue en coupe selon la ligne VII-VII de la fig. 6;

la fig. 8, une section partielle d'un assemblage de nappes, et

la fig. 9, une section partielle d'une variante d'un assemblage de nappes.

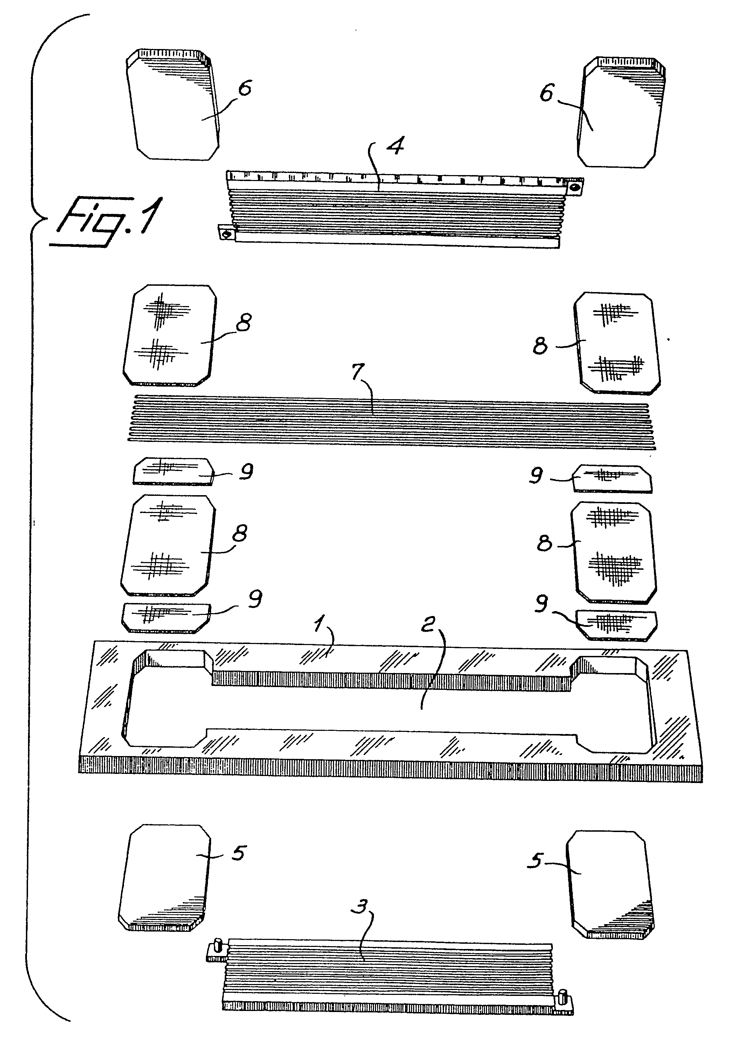

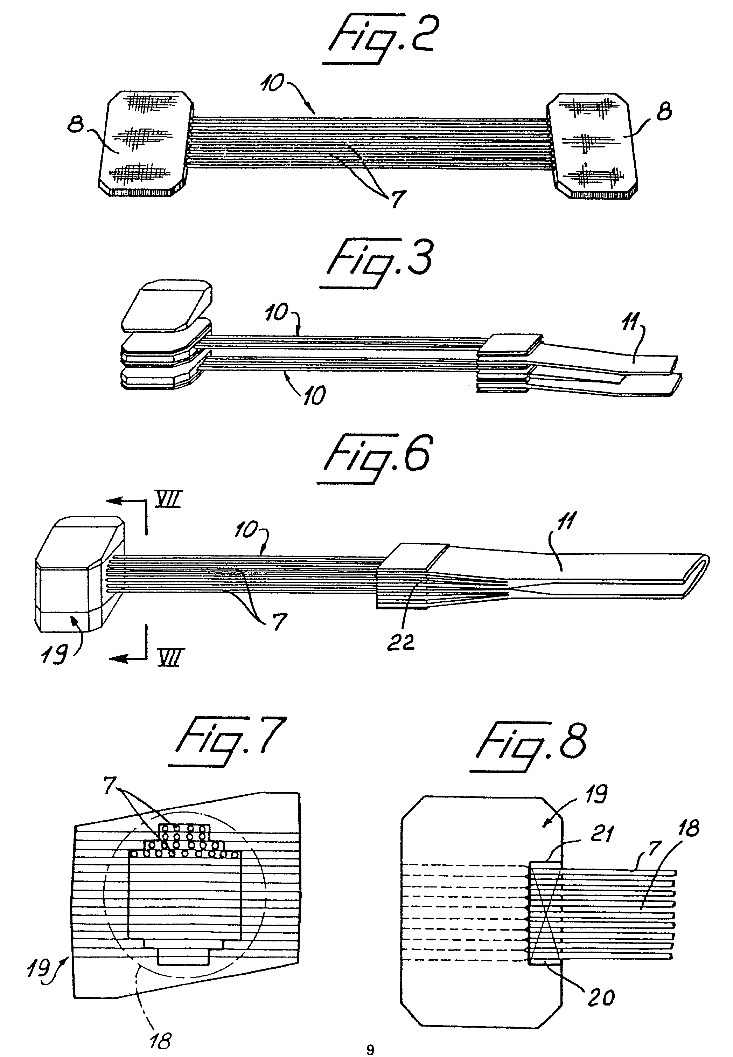

La fig. 1 représente en vue éclatée un moule de fabrication d'une nappe unitaire constituée par un corps 1 présentant à sa partie centrale un évidement 2. Cet évidement permet l'introduction de deux plaques rainurées 3 et 4 et de deux jeux de plaques de fermeture d'extrémités, respectivement 5 et 6. Au-dessus du corps 1, on a représenté avant assemblage les éléments constitutifs de la nappe en matériau fibreux qui, dans l'exemple représenté, sont formés par un ensemble de baguettes 7 constituant les tronçons et par des nappes de tissu 8 et des cales latérales d'extrémité 9. Pour fabriquer une nappe unitaire, les baguettes 7 imprégnées de résine thermodurcissable non encore polymérisée sont disposées dans les rainures des plaques 3. Les extrémités des baguettes 7 reposent dans le moule sur au moins une nappe de tissu 8 de fibres imprégnées de résine et sont écrasées par au moins une seconde nappe de tissu 8, l'ensemble constituant un sandwich permettant de réaliser une attache de type feuilleté. L'ensemble baguettes-nappes de tissu-cales est pressé dans le moule et polymérisé par chauffage. On obtient ainsi une nappe unitaire 10, telle que celle qui est représentée sur la fig. 2, dans laquelle les efforts sont transmis des baguettes 7 dans les tissus 8 par cisaillement dans la résine. Dans l'exemple qui est représenté sur les fig. 1 et 2, les profilés extrudés par la filière ont la forme de baguettes de sections diverses, circulaire ou polygonale par exemple, mais il est évident que l'on pourrait également utiliser des profilés de forme quelconque, en forme de lame de sections diverses, rectangulaire par exemple, ou d'ellipse plus ou moins aplatie, notamment, la seule adaptation nécessaire résidant dans la forme des rainures des plaques 3.

On va, pour obtenir un élément flexible et torsible, assembler plusieurs nappes unitaires, de manière à obtenir des extrémités qui permettent le raccordement des organes à lier mécaniquement.

La fig. 3 représente très schématiquement un tel assemblage sur lequel on peut voir que deux nappes unitaires 10 sont réunies, par leur extrémité gauche, de manière à former un bloc dans lequel pourront être forés deux alésages pour constituer une chape, alors que leur extrémité droite est destinée à participer à une liaison en éclisse. Un tel organe est en particulier destiné à assurer, à l'aide d'un élément flexible et torsible, la liaison mécanique entre la structure résistante d'une pale 11 et un moyeu de rotor d'hélicoptère (non représenté), et à permettre la commande de ladite pale en incidence en autorisant ses mouvements en battement et traînée.

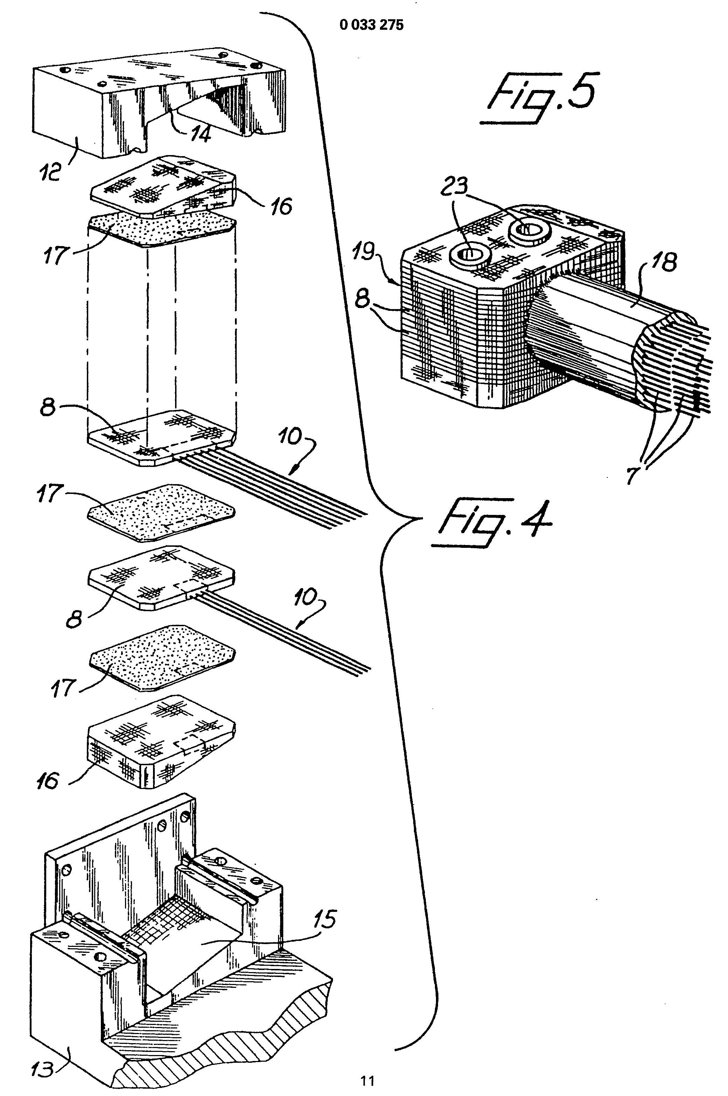

La fig. 4 représente une vue partielle de l'extrémité d'un moule permettant d'assembler plusieurs nappes unitaires. Sur la fig. 3, on n'a représenté schématiquement que deux nappes unitaires 10 alors que, dans la pratique, un empilage peut comprendre entre dix et vingt nappes unitaires ou élémentaires réunies par des films de colle. Sur la fig. 4, on n'a représenté que quelques nappes, dans un souci de simplification, et les extrémités supérieure 12 et inférieure 13 du moule d'assemblage.

Comme cela apparaît sur la figure, les fonds 14 et 15 du moule sont inclinés, des sabots 16 permettant de réaliser un précalage en incidence nécessaire dans l'application mentionnée ci-dessus. Le moule représenté sur la fig. 4 permet de grouper les nappes unitaires de façon très précise et de les assembler par collage sous pression, un film de colle 17 étant introduit entre chacune des nappes, la colle étant durcie lors de l'opération de chauffage du moule.

A sa sortie du moule, l'élément terminé présente la forme représentée sur la fig. 5 après enrobage des baguettes 7, ce qui produit dans la partie centrale un manchon cylindrique 18, après mise en place de douilles 23 retenues par collage pour former des chapes de fixation de l'élément à chacune de ses extrémités. Les douilles forment des logements à des axes de fixation des organes à raccorder. L'enrobage est réalisé en coulant ou en injectant dans le faisceau de baguettes un élastomère, à l'état liquide ou visqueux, pour constituer la portion centrale de l'élément flexible et torsible par rapport aux extrémités qui, elles, sont rigides.

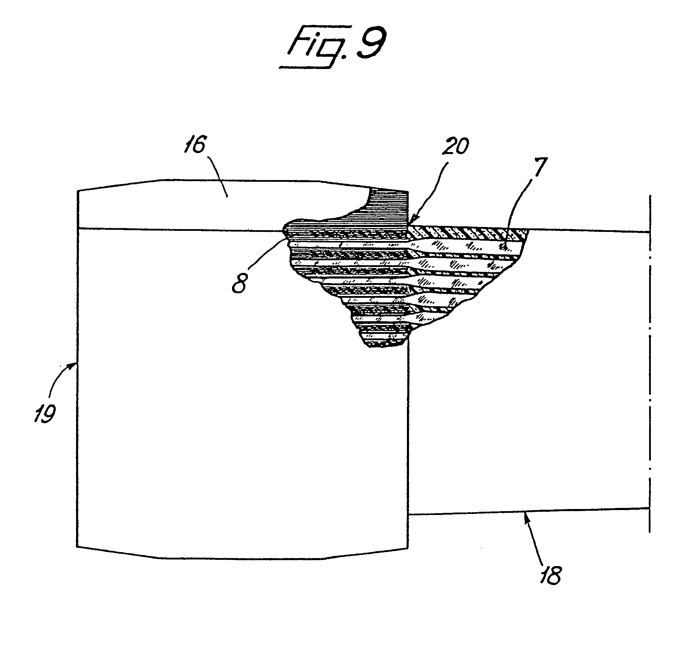

De préférence, et comme il apparaît sur les fig. 7 et 8, on prévoit entre la partie centrale torsible et flexible 18 de l'élément et l'emplanture rigide 19 une courte zone de transition 20 destinée à réduire les surcontraintes sur les profilés 7 à l'encastrement.

A cet effet, un chambrage est effectué dans la zone d'emplanture 20 et est rempli par injection d'un élastomère moins souple que celui de la matrice dans la partie centrale de l'élément flexible et torsible. Cet élastomère vient enrober en 21 les baguettes afin de réduire la rigidité de leur encastrement dans les zones d'emplanture, donc leur niveau de contrainte quand le bras de liaison est sollicité en flexion et/ou en torsion. Le chambrage est obtenu en effectuant un découpage dans chacun des organes constituant l'élément (nappe unitaire, nappes de tissu, films de colle, sabots, etc.). Ce chambrage peut également être obtenu par un découpage effectué dans les tissus 8 utilisés pour la confection des nappes unitaires, comme indiqué à la fig. 9. Pour éviter l'introduction de colle pendant l'assemblage, le chambrage est rempli d'un produit soluble éliminé après polymérisation.

La fig. 6 représente un mode de réalisation particulier d'un élément flexible et torsible selon l'invention, tel que cet élément constitue un bras de liaison entre une pale 11 et un moyeu de rotor d'hélicopère et tel qu'une extrémité 19 de l'élément est conformée en un bloc aménageable en chape pour l'attache au moyeu, tandis que l'autre extrémité forme une liaison en éclisse pour un longeron de pale. Des stratifils longitudinaux 22 venant du longeron 11 sont intercalés entre chaque nappe unitaire 10 de baguettes 7, celles-ci étant, au niveau de l'attache en éclisse, écrasées comme précédemment. L'élastomère est ensuite injecté dans la partie centrale, puis vulcanisé.

## Revendications

1. Procédé de fabrication continue d'un élément composite flexible et torsible constitué de filaments à forte résistance mécanique, d'une résine thermodurcissable et d'un élastomère vulcanisable, selon lequel on fait, dans un premier temps, circuler les filaments continus dans une machine d'imprégnation contenant la résine thermodurcissable, puis on calibre les filaments imprégnés et réunis entre eux en les faisant passer dans une filière pour obtenir un profilé à la forme désirée, le profilé étant ensuite coupé en tronçons de longueur désirée, caractérisé en ce que:

— on réalise séparément plusieurs nappes unitaires (10), chaque nappe unitaire étant obtenue par disposition de tronçons (10) imprégnés de résine et conservés, à l'état non polymérisé, dans des rainures calibrées ménagées dans un moule (1, 3, 4) de fabrication, les extrémités des tronçons étant écrasées entre des nappes (8) de tissu imprégnées de résine, l'ensemble étant ensuite polymérisé et formant une nappe unitaire;

— on empile plusieurs nappes unitaires (10) dans un moule d'assemblage (12, 13);

— on injecte l'élastomère à l'état visqueux dans ledit faisceau, la qualité et la viscosité adoptées étant fonction des caractéristiques voulues d'élasticité et d'amortissement voulues, et

— on vulcanise ledit élastomère dans des conditions de température et de durée liées à ses caractéristiques.

2. Procédé de fabrication selon la revendication 1, caractérisé en ce que le profilé précité est calibré et découpé en forme de baguettes (7).

3. Procédé de fabrication selon la revendication 1, caractérisé en ce que le profilé est calibré et découpé pour former des lames.

4. Procédé de fabrication selon l'une quelconque des revendications 1 à 3, caractérisé en ce que l'on dispose des couches de colle (17) entre des nappes de tissu (8), des nappes unitaires (10) empilées, et que l'on chauffe et comprime l'ensemble dans un moule pour constituer des attaches rigides de type feuilleté pour deux organes à raccorder.

5. Procédé de fabrication selon la revendication 4, caractérisé en ce que l'on perce des alésages à l'intérieur de l'attache rigide, puis emmanche des douilles (23) dans lesdits alésages pour servir de logement à des axes de fixation des organes à raccorder.

6. Procédé de fabrication selon l'une quelconque des revendications 1 à 3, caractérisé en ce qu'une extrémité de l'élément flexible et torsible est réalisée en intercalant entre les nappes unitaires (10) des stratifils longitudinaux provenant d'une pièce à relier pour former une attache en éclisse.

7. Procédé de fabrication selon l'une quelconque des revendications 1 à 5, caractérisé en ce qu'on pratique un chambrage (21) dans au moins l'une des extrémités de l'attache rigide, le chambrage étant rempli par injection avec un élastomère moins souple que celui injecté dans la partie centrale dudit élément, de manière à réduire la rigidité de l'encastrement des découpes.

8. Elément de liaison mécanique flexible et torsible obtenu par le procédé selon l'une quelconque des revendications précédentes.

## Claims

1. Method for the continuous manufacture of a flexible, composite, twistable element which comprises filaments having a high mechanical strength, a thermo-setting resin and a vulcanizable elastomer, according to which method the continuous filaments are first circulated through an impregnating machine containing the thermo-setting resin, after which the impregnated filaments which are joined to one another are gauged by passing them through a perforated plate to obtain a section having the desired shape, the section then being cut into pieces of a desired length, characterized in that a plurality of unitary sheets (10) is prepared separately, each unitary sheet being obtained by placing pieces (10), impregnated with resin and in a non-polymerized state, in gauged grooves in a manufacturing mould (1, 3, 4), the ends of the pieces being compressed between sheets (8) of material impregnated with resin, the whole then being polymerized to form a unitary sheet, the plurality of sheets then being stacked in an assembly mould (12, 13) after which the elastomer is injected in viscous state into the said stack, the quality and viscosity used being a function of the desired characteristics of elasticity and damping, and then the said elastomer is vulcanized in conditions of temperature and duration appropriate to its characteristics.

2. Method of manufacture according to claim 1, characterized in that the afore-mentioned section is gauged and cut in the shape of rods (7).

3. Method of manufacture according to claim 1, characterized in that the section is gauged and cut to form strips.

4. Method of manufacture according to any of claims 1 to 3, characterized in that layers of adhesive (17) are disposed between the sheets (8) of material of the stacked unitary sheets (10), and the whole is then heated and compressed in a mould to form rigid attachments of the laminated type for two members to be coupled together.

5. Method of manufacture according to claim 4, characterized in that bores are formed in the rigid attachments, after which sockets (23) are fitted into the said bores to serve as a bearing for the holding shafts of the members to be coupled.

6. Method of manufacture according to any one of claims 1 to 3, characterized in that one end of the flexible twistable element is formed by inserting between the unitary sheets (10) longitudinal rovings originating from a piece to be connected to form an attachment in the form of a splice piece.

7. Method of manufacture according to any one of claims 1 to 5, characterized in that a recess (21) is made in at least one end of the rigid attachment, the recess being filled, by injection, with an elastomer that is less elastic than that injected into the central parts of the said element in such a manner as to reduce the rigidity of the anchorage of the cut pieces.

8. Flexible, mechanical, twistable connecting element when obtained by the method according to any one of the preceding claims.

**Patentansprüche**

1. Verfahren zur kontinuierlichen Herstellung eines zusammengesetzten biegsamen und verdrehbaren Elements, das aus Fasern mit grosser mechanischer Widerstandskraft, aus einem hitzehärtbaren Kunststoff (Duroplast) und aus einem vulkanisierbaren Elastomer besteht, wobei in einem ersten Schritt die endlosen Fasern in einer das Duroplast enthaltenden Imprägnierungsvorrichtung zirkulieren gelassen werden, dann die imprägnierten und miteinander verbundenen Fasern kalibriert werden, indem man sie eine Formdüse passieren lässt, um ihnen das gewünschte Profil zu geben, und danach die profilierten Fasern auf Stücke der benötigten Länge zerschnitten werden, dadurch gekennzeichnet, dass

— getrennt voneinander mehrere einheitliche Lagen (10) hergestellt werden, indem man harzgetränkte und in nichtpolymerisiertem Zustand befindliche Faserlängen in kalibrierte Rillen in einer Fertigungsform (1, 3, 4) einlegt, wobei die Enden der Faserlängen zwischen harzgetränkte Gewebeschichten (8) gepresst werden und das Ganze dann zu einer einheitlichen Lage polymerisiert wird,

— mehrere einheitliche Lagen (10) in einer Zusammenfügeform (12, 13) aufeinander gestapelt werden,

— in dieses Bündel das Elastomer in zähflüssigem Zustand eingespritzt wird, wobei die Art und Viskosität des Elastomers so gewählt werden, dass die gewünschte Elastizität und Dämpfung erzielt wird, und

— das Elastomer unter seiner Natur entsprechenden Temperatur- und Zeitbedingungen vulkanisiert wird.

2. Verfahren nach Anspruch 1, dadurch gekennzeichnet, dass die profilierten Fasern in Form von Stäbchen (7) kalibriert und geschnitten werden.

3. Verfahren nach Anspruch 1, dadurch gekennzeichnet, dass die profilierten Fasern in Form von Streifen kalibriert und geschnitten werden.

4. Verfahren nach einem der Ansprüche 1 bis 3, dadurch gekennzeichnet, dass man zwischen die Gewebeschichten (8) der einheitlichen, übereinandergestapelten Lagen (10) Klebstoffschichten (17) bringt und das Ganze in einer Form erhitzt und presst, um eine steife Halterung in Form eines Schichtkörpers zu erhalten, die zwei Teile miteinander verbinden kann.

5. Verfahren nach Anspruch 4, dadurch gekennzeichnet, dass in diese steifen Halterungen Bohrungen eingeschnitten und diese Bohrungen mit Buchsen (23) versehen werden, die als Lager für die Befestigungsachsen der beiden zu verbindenden Teile dienen können.

6. Verfahren nach einem der Ansprüche 1 bis 3, dadurch gekennzeichnet, dass das eine Ende des biegsamen und verdrehbaren Elements so ausgeführt ist, dass zwischen die einheitlichen Lagen (10) längliche Faserschichtkörper (22) eingeschoben sind, die von einem der zu verbindenden Teile ausgehen und eine Laschenhalterung bilden.

7. Verfahren nach einem der Ansprüche 1 bis 5, dadurch gekennzeichnet, dass mindestens das eine Ende der steifen Halterung mit einem Einschnitt (21) versehen wird, welcher mit einem Elastomer ausgespritzt wird, das weniger weich ist als das in die Mitte dieses Elements eingespritzte Elastomer, so dass eine weniger starre Einbindung der Faserlängen bewirkt wird.

8. Biegsames und verdrehbares Verbindungselement, das nach dem Verfahren gemäss einem der vorstehenden Ansprüche erhalten worden ist.

Fig.1

0 033 275

*Fig.2*

*Fig.3*

*Fig.6*

*Fig.7*

*Fig.8*

*Fig.5*

*Fig.4*

_Fig. 9_